# FASCICULE DE BREVET EUROPEEN

(11) **EP 0 915 199 B1**
(45) Date de publication et mention de la délivrance du brevet: **02.02.2005**
(21) Numéro de dépôt: 98402750.8
(22) Date de dépôt: 05.11.1998
(51) Int. Cl.: D06F 58/28

(54) **Procédé d'optimisation de la consommation d'énergie d'une machine de séchage par courant d'air de linge disposé dans une enceinte**
Verfahren zum Optimieren des Energieverbrauchs in einem Wäschetrockner
Method for optimizing the energy consumption in a laundry drier

(30) Priorité: 05.11.1997 FR 9713917
(43) Date de publication de la demande: 12.05.1999
(73) Titulaire: Brandt Industries, 92500 Rueil Malmaison (FR)
(72) Inventeur: Geay, Jean-Claude, THOMSON-CSF Propriété Int., 94117 Arcueil cedex (FR); Ouvrard, Gilles, THOMSON-CSF Propriété Int., 94117 Arcueil cedex (FR); Soulard, Antoine, THOMSON-CSF Propriété Int., 94117 Arcueil cedex (FR)
(74) Mandataire: Santarelli

(56) Documents cités:
- EP-A- 0 428 846
- DE-A- 2 537 821
- DE-A- 3 820 815
- US-A- 3 508 340
- US-A- 4 112 589

## Description

La présente invention se rapporte à un procédé d'optimisation de la consommation d'énergie d'une machine de séchage par courant d'air de linge disposé dans une enceinte.

Les machines telles que les sèche-linge et les lavantes-séchantes consomment beaucoup d'énergie pour assurer le séchage du linge. Ceci est dû au fait que pour réduire la durée du séchage on doit augmenter la puissance de séchage afin d'élever la température de l'air de séchage, ce qui augmente la vitesse d'évaporation de l'eau contenue dans le linge, mais qui a pour effet secondaire d'augmenter les déperditions thermiques.

En plus de cet inconvénient de forte consommation d'énergie, ces machines ont des températures de fonctionnement élevées. Par conséquent, le linge et les composants des machines sont soumis à des températures proches des limites tolérables, ce qui présente des risques de dégradation du linge, des risques de brûlures pour l'usager, et nécessite l'emploi de matériaux résistant à la chaleur pour fabriquer ces machines, d'où un prix de revient élevé.

On connaît, par exemple d'après les documents US-A-4 112 589, DE-A-2 537 821, US-A-3 508 340, DE-A-3 820 815 et EP-A- 0 428 846 des sèche-linge pour lesquels il est préconisé de réduire la puissance de chauffage en fin de cycle, mais aucun de ces documents ne propose de solution pour limiter la durée du processus de séchage tout en obtenant une dessiccation complète ou presque complète du linge, car la diminution de la puissance de chauffage entraîne un allongement, qui peut être prohibitif, de la durée de séchage.

La présente invention a pour objet un procédé de séchage de linge dans un tambour rotatif, procédé qui soit économe en énergie, sans augmenter de façon non acceptable pour l'utilisateur la durée du processus de séchage, et qui ne présente de risques ni pour ces produits ou matériaux, ni pour l'utilisateur.

La présente invention a également pour objet une machine mettant en oeuvre un tel procédé, qui ne soit pas plus onéreuse à produire que les machines connues.

Le procédé conforme de l'invention est un procédé de séchage d'une charge de linge dans un sèche-linge ou une lavante-séchante à tambour rotatif, ce procédé comportant une première phase (P1) de montée en température et de stabilisation à une température donnée au cours de laquelle l'ensemble comportant les structures de la machine, le linge à sécher et l'air de séchage sont chauffés, une seconde phase (P2) de palier de séchage au cours de laquelle les calories communiquées à l'air de séchage servent prioritairement à vaporiser l'eau contenue dans le linge, et une troisième phase (P3) de fin de séchage pour la vaporisation de l'eau restant au "coeur" des fibres du linge lorsque l'eau contenue à la périphérie de ces fibres a été évaporée, la rotation du tambour dans un sens entraînant un débit d'air de séchage supérieur au débit d'air obtenu lorsque le tambour tourne dans le sens opposé, caractérisé en ce que pour optimiser la consommation d'énergie, le tambour est entraîné alternativement dans un sens de rotation puis dans l'autre au cours des trois phases de séchage, et en ce qu'au cours de la troisième phase (P3) le débit d'air de séchage diminue, cette diminution étant obtenue en modifiant le rapport des durées de rotation du tambour dans chaque sens de rotation.

La présente invention sera mieux comprise à la lecture de la description détaillée d'un exemple de mise en oeuvre, pris à titre d'exemple non limitatif et illustré par le dessin annexé, sur lequel :
- la figure 1 est un chronogramme de la température d'une charge de linge humide soumise à un processus de séchage, et
- la figure 2 est un chronogramme du fonctionnement du tambour et de la puissance de chauffage de l'air de séchage dans un processus de séchage conforme à l'invention.

L'invention est décrite ci-dessous en référence à une machine telle qu'un sèche-linge ou une lavante-séchante, mais il est bien entendu qu'elle n'est pas limitée à cette application, et qu'elle peut être mise en oeuvre dans de nombreux autres processus de séchage par air chaud.

Dans les sèche-linge actuels, de l'air asséché et chauffé à « haute » température (environ 120°C) par passage sur une résistance chauffante de forte puissance (généralement 2 400 à 2 800 W) est injecté à l'intérieur du tambour dans lequel est disposé le linge à sécher. Cet air chaud, en augmentant la température du linge, permet la vaporisation de l'eau contenue dans les fibres de ce linge, et se charge des molécules d'eau vaporisées. La vaporisation de l'eau du linge est d'autant plus rapide que la température du linge est élevée. D'autre part, l'aptitude de l'air à se charger en molécules d'eau est d'autant meilleure que sa température est élevée. Mais, plus la température de l'air de séchage est élevée, plus les déperditions thermiques sont élevées. En outre, dans le cas des machines à évacuation, cet air humide est rejeté à l'extérieur des machines, avec une température d'environ 60°C, ce qui constitue une déperdition d'énergie supplémentaire.

Selon la présente invention, le séchage est effectué de façon à apporter à la masse de linge à sécher juste le minimum d'énergie nécessaire pour vaporiser l'eau qu'il contient, en particulier en dosant l'énergie de chauffage d'air en fonction de l'état du linge et des conditions de fonctionnement de la machine.

Par conséquent, le séchage du linge est effectué à « basse » température (à la limite, cette température est légèrement supérieure de quelques degrés à la température ambiante). Pour compenser la diminution de la vitesse d'évaporation de l'eau contenue dans le linge, diminution due à l'aptitude réduite de l'air à se charger en eau, on augmente, dans des limites tolérables par l'utilisateur, la durée du processus de séchage et on optimise les conditions de brassage du linge dans le tambour de la machine.

Dans les machines actuelles, les différents programmes de séchage font intervenir en général cinq paramètres :
1°) la durée de séchage - Celle-ci est soit sélectionnée par une minuterie manoeuvrée par l'utilisateur, soit déterminée automatiquement par détection d'un état de « fin de séchage ». Cet état peut être détecté soit par une mesure de la résistivité du linge à l'aide de deux électrodes en contact avec le linge, soit par une mesure de température (absolue ou relative), soit par une mesure directe d'humidité.
2°) Le cadencement de rotation du tambour contenant le linge. Cette rotation peut être commandée dans un seul sens ou alternativement dans les deux sens. Dans ce dernier cas, le rapport τ entre les durées de rotation dans chacun des deux sens est généralement différent de 1. Il est par exemple égal à 4/1 (c'est-à-dire 80 % de la durée T d'une période dans un sens, et 20 % dans l'autre sens).
3°) La durée T de la période de cadencement du moteur d'entraînement du tambour (c'est-à-dire le laps de temps séparant deux débuts de rotation dans un même sens. Selon un exemple courant, T = 4 mn, et si τ = 4/1, la rotation dans un sens dure 192 s, et celle dans l'autre sens dure 48 s. Il faut toutefois noter que l'on prévoit des temps d'arrêt du tambour (par exemple d'environ 4 s) pris à la fin de la rotation dans chaque sens, pour tenir compte de l'inertie du tambour et ne pas inverser brusquement le sens de rotation de son moteur d'entraînement.
4°) Les débits de ventilation. Il existe des dispositifs de ventilation à pales symétriques ou à pales dissymétriques. Dans la plupart des sèche-linge à évacuation, la turbine de ventilation est solidaire du moteur d'entraînement du tambour, afin d'économiser un moteur. Lorsque les pales sont symétriques, le débit d'air est constant, quel que soit le sens de rotation du tambour. Dans le cas de pales dissymétriques, le débit d'air dépend du sens de rotation de la turbine. On a, par exemple, un débit d'air de 150 m³/h dans un sens de rotation et 40 m³/h dans l'autre sens.
5°) Les puissances de chauffage de l'air de séchage. Elles peuvent être différentes suivant le débit d'air : par exemple de 2 800 W pour un débit de 150 m³/h et de 1 000 W pour un débit de 40 m³/h. Dans d'autres machines, cette puissance peut être constante, quel que soit le débit d'air, par exemple de 2 000 W ou moins.

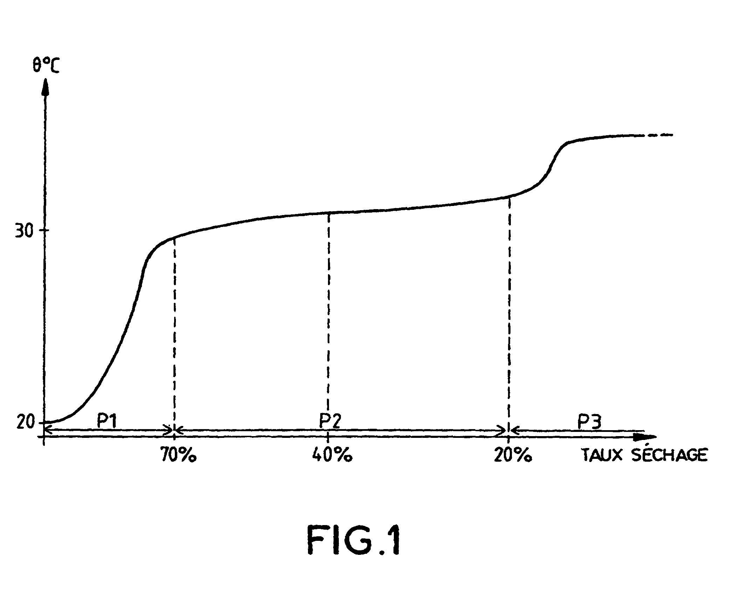

Selon l'invention, le dispositif de commande de la machine est un dispositif de régulation qui agit sur le débit d'air de séchage et la puissance de chauffage, cette régulation étant effectuée en particulier à la fin du processus de séchage (période P3 de la figure 1), en fonction, par exemple, du gradient de dessiccation du linge. Ces paramètres peuvent être modifiés une seule fois (par exemple au début de la période P3), ou bien, de préférence, ils peuvent être ajustés en permanence pour optimiser le séchage pendant toute la période P3 (et même pendant au moins la fin de la période P2).

Pour mieux comprendre l'invention, on va d'abord exposer les différents phénomènes se produisant au cours d'un processus de séchage de linge, que l'on peut décomposer en trois phases principales :
1°) Phase de montée en température et de stabilisation à une température donnée. Les calories fournies par le dispositif de chauffage de la machine servent principalement à chauffer l'ensemble comportant les structures de la machine, le linge à sécher et l'air de séchage.
2°) Phase de palier de séchage. Lorsque ledit ensemble a été chauffé jusqu'à une température de fonctionnement normal (fonctionnement à une température à peu près stable), les calories communiquées à l'air de séchage servent prioritairement à vaporiser l'eau contenue dans le linge, et en particulier celle se trouvant à la périphérie des fibres du linge. Cette phase dure par exemple jusqu'à l'obtention d'un taux de séchage d'environ 20 % (le taux de séchage étant défini comme le rapport entre la masse d'eau contenue dans le linge et la masse de linge sec).
3°) Phase de fin de séchage. Lorsque l'eau contenue à la périphérie des fibres du linge a été évaporée, les calories transportées par l'air de séchage servent à vaporiser l'eau restant dans le « coeur » des fibres. Ce processus est beaucoup plus lent que celui de l'évaporation de l'eau contenue à la périphérie, car les molécules d'eau migrent difficilement vers la périphérie des fibres, et il est alors très difficile de ne pas gaspiller de calories.

Les machines actuelles sont prévues pour sécher une charge de linge « normalisée » (4,5 kg) en un temps minimum (généralement 90 mn). A cet effet, elles consomment beaucoup d'énergie (par exemple 800 Wh/kg de linge, soit 3,6 kWh pour la charge normalisée). La puissance de chauffage est maximale pour monter en température ledit ensemble (structures de la machine, linge et air de séchage) et pour vaporiser le plus vite possible l'eau contenue dans le linge. Pour ce qui concerne la première phase du séchage et une partie de la deuxième, un tel procédé peut être considéré comme assez efficace, car la plupart des calories de l'air de séchage servent effectivement à chauffer ledit ensemble, ce qui est inévitable, puis à vaporiser l'eau se trouvant à la périphérie des fibres. Par contre, à la fin de la deuxième phase, et surtout pendant la troisième phase, il y a une forte déperdition de calories à cause de la lenteur de migration des molécules d'eau vers la périphérie des fibres (il suffirait de très peu de calories pour vaporiser le peu de molécules d'eau parvenant à la périphérie) et à cause d'un manque d'optimisation de l'apport de calories au linge.

Le procédé de l'invention agit tout au long du processus de séchage, sur les deux paramètres mentionnés ci-dessus, afin de minimiser les déperditions de calories, ce qui, bien entendu, allonge le temps total de séchage, sans que toutefois le temps de séchage selon l'invention augmente dans le rapport entre l'énergie consommée par une machine connue et l'énergie consommée par une machine conforme à l'invention.

Selon le procédé de l'invention, on diminue très sensiblement par rapport à l'art antérieur (dans un rapport compris entre 1/7 et 1/3 environ) la puissance de chauffage pendant au moins la fin du processus de séchage. Cette diminution peut être effectuée de plusieurs façons : soit une diminution à une valeur fixe (par exemple 400 W) pendant toute la durée du séchage, soit par paliers en cours de séchage, (par exemple une première diminution à la fin de ladite première phase, et une seconde diminution à la fin de la deuxième phase), soit progressivement tout au long du processus (par exemple en fonction du taux de séchage, comme exposé ci-dessous en référence à la figure 1). Bien entendu, si l'on ajoute du linge en cours de séchage, on peut prévoir une augmentation temporaire de la puissance de chauffage (augmentation à une valeur inférieure ou égale à la puissance des machines de l'art antérieur). Dans tous les cas, la puissance de chauffage au tout début du processus de chauffage peut être inférieure ou égale à celle des machines de l'art antérieur.

On a représenté en figure 1 l'évolution de la température du linge en fonction du temps, et on a également porté sur l'axe des abscisses trois valeurs moyennes de taux de séchage de ce linge, et on y a indiqué les trois phases précitées du processus de séchage (P1 à P3), et ce, pour une puissance de chauffage de 400 W, selon l'invention.

On constate qu'au cours de la première phase (P1), la température du linge, qui est supposée être égale à la température ambiante (20°C par exemple) au début du processus de séchage monte rapidement jusqu'à une valeur d'environ 30°C. Au cours de la phase suivante (P2), la température du linge augmente très peu. Lors de la troisième phase (P3), puisqu'il reste peu d'eau à vaporiser, les calories transportées par l'air de séchage augmentent la température du linge. Grâce à la faible puissance de chauffage, cette augmentation est limitée, et la température du linge atteint environ 40°C et s'y maintient. On notera que dans le cas de certains procédés de l'art antérieur, cette augmentation serait beaucoup plus élevée, et pourrait endommager le linge si le séchage était poursuivi au-delà d'environ 90 mn à la puissance initiale élevée (par exemple 2 800 W).

A la fin de P1, le taux de séchage du linge est d'environ 70 %, au milieu de P2, il est d'environ 40 %, et à la fin de P2, il est d'environ 20 %

Si l'on régule la puissance de chauffage en fonction du taux de séchage, on peut la faire varier, par exemple entre 1 000 W, au début du processus, et 200 W à la fin du séchage. Cette variation peut alors suivre une courbe dont l'allure est sensiblement inverse de celle de la courbe de la figure 1.

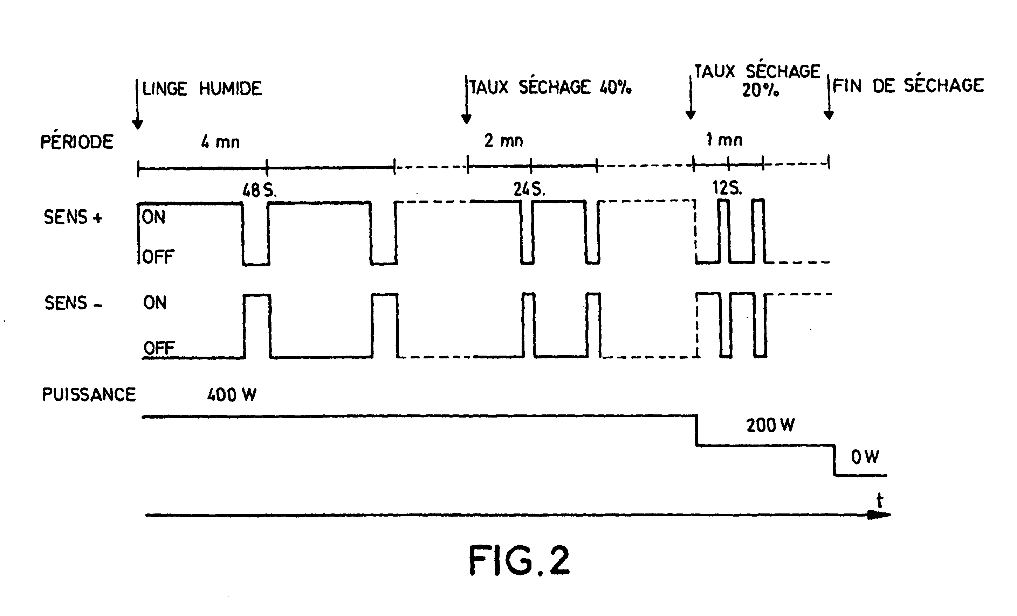

Le procédé de l'invention prévoit non seulement d'agir sur la puissance de chauffage, mais également et simultanément sur l'autre paramètre cité. La durée de séchage est, bien entendu allongée, comme précisé ci-dessus, et est, de préférence déterminée automatiquement d'après le taux de séchage du linge. Par ailleurs, la puissance de chauffage peut être asservie au débit d'air de séchage, afin de rendre indépendante du débit d'air l'énergie de vaporisation du fait que le débit d'air peut varier dans de fortes proportions, en fonction du sens de rotation de la turbine du circuit d'air. En outre, selon l'invention, l'un des sens de rotation (sens « + ») du tambour, correspond à un débit d'air élevé et à une puissance de chauffage relativement élevée, alors que l'autre sens de rotation (sens « - ») correspond à un débit d'air plus faible et à une puissance de chauffage plus faible, et le rapport entre les durées respectives de ces deux sens de rotation est variable, et la période du tambour (c'est-à-dire le laps de temps séparant les débuts de deux rotations consécutives de même sens) varie. Selon l'exemple de la figure 2, la période peut être de 4 mn jusqu'à ce que le taux de séchage atteigne 40 %, puis de 2 mn jusqu'à ce que le taux de séchage atteigne 20 %, et de 1 mn jusqu'à la fin du séchage. Le rapport des durées sens +/sens - est de 5 jusqu'au taux de séchage de 20 %, puis s'inverse (durée sens « + »/ durée sens « - » = 1/5). La puissance de chauffage est de 400 W pour un taux de séchage supérieur à 20 %, puis elle est réduite à 200 W. Bien entendu, ces valeurs peuvent être différentes, et varier progressivement tout au long du processus de séchage. La période du tambour peut ainsi être optimisée de façon que le linge soit réparti de façon régulière dans le tambour, en particulier à la fin de la phase P2, c'est-à-dire pour que le linge ne soit pas entortillé ou noué. De cette façon, on améliore l'échange entre l'air chaud et le linge, en particulier pendant la phase P3, et on favorise donc la vaporisation de l'eau. Pendant la phase P3, on modifie sensiblement le rapport puissance de chauffage/débit d'air pour continuer de vaporiser de façon optimale l'eau du linge, avec une déperdition minimale de calories. Cette optimisation est obtenue, dans l'exemple de la figure 2, en diminuant la puissance de chauffage à 200 W, en inversant le rapport des durées sens « + »/sens « - ». De plus, pour améliorer le détassage du linge (pour qu'il soit réparti le plus uniformément possible dans le volume intérieur du tambour), on réduit la période du tambour (réduite à 1 mn dans l'exemple cité).

Au lieu de faire varier tous les paramètres précités, ou une partie d'entre eux, par paliers, on peut les faire varier progressivement ou les asservir à la dynamique de séchage du linge. Cette dynamique peut être déterminée à partir des valeurs instantanées ou des gradients suivants : du taux de séchage du linge et/ou de sa température et/ou de la température de l'air à la sortie du tambour et/ou de l'humidité relative et/ou absolue de l'air à la sortie du tambour et/ou de la différence d'humidités relatives de l'air pour les deux sens de rotation du tambour et/ou de la résistivité du linge.

Ainsi, l'invention procure de nombreux avantages: économies d'argent pour l'utilisateur (par diminution de l'énergie de chauffage), pour le fabricant grâce à la possibilité d'utiliser des matériaux moins « nobles » (il n'y a plus besoin d'utiliser des matériaux résistant à de hautes températures), et grâce à la diminution de la puissance de chauffage entraînant la simplification des dispositifs de sécurité (thermostats, fusibles...). En outre, le linge ne risque plus la détérioration due aux températures élevées, et il est peu ou pas froissé, et séché de façon plus homogène ce qui rassure l'utilisateur, d'autant plus qu'il ne risque pas de se brûler au contact de parties chaudes de la machine et que la machine ne présente plus de risques de détérioration par surchauffage et a ainsi une plus grande longévité. En outre, le linge n'a plus besoin d'être trié avant d'être mis dans la machine. De plus, dans le cas des machines à sélection de durée de séchage, il n'y a plus de risque pour les machines ou le linge si l'utilisateur sélectionne une durée trop longue. Les machines conformes à l'invention présentent l'avantage d'une simplification des programmes du fait qu'il n'est plus nécessaire de choisir le type de textile, et elles peuvent être équipées de divers types de dispositifs de détection automatique de fin de séchage. Enfin, ces machines contribuent à la protection de l'environnement grâce à leur faible consommation d'énergie et grâce au fait que celles du type à évacuation limitant les rejets.

## Revendications

1. Procédé de séchage d'une charge de linge dans un sèche-linge ou une lavante-séchante à tambour rotatif, ce procédé comportant une première phase (P1) de montée en température et de stabilisation à une température donnée au cours de laquelle l'ensemble comportant les structures de la machine, le linge à sécher et l'air de séchage sont chauffés, une seconde phase (P2) de palier de séchage au cours de laquelle les calories communiquées à l'air de séchage servent prioritairement à vaporiser l'eau contenue dans le linge, et une troisième phase (P3) de fin de séchage pour la vaporisation de l'eau restant au "cour" des fibres du linge lorsque l'eau contenue à la périphérie de ces fibres a été évaporée, la rotation du tambour dans un sens entraînant un débit d'air de séchage supérieur au débit d'air obtenu lorsque le tambour tourne dans le sens opposé,
**caractérisé en ce que** pour optimiser la consommation d'énergie, le tambour est entraîné alternativement dans un sens de rotation puis dans l'autre au cours de chacune des trois phases de séchage, et **en ce qu'**au cours de la troisième phase (P3) le débit d'air de séchage diminue, cette diminution étant obtenue en modifiant le rapport des durées de rotation du tambour dans chaque sens de rotation.

2. Procédé de séchage selon la revendication 1, **caractérisé en ce que** puissance de chauffage diminue en fin de procédé.

3. Procédé de séchage selon l'une des revendications 1 ou 2, **caractérisé en ce que** la durée de la période de cadencement du moteur d'entraînement du tambour, c'est-à-dire le laps de temps séparant deux débuts de rotation du tambour dans un même sens, est réduit pour la troisième phase (P3).

4. Procédé de séchage selon l'une des revendications 1 à 3, **caractérisé en ce que** le rapport des durées de rotation du tambour dans chaque sens de rotation et/ou la puissance de chauffage d'air de séchage et/ou la durée de la période de cadencement du moteur d'entraînement du tambour varie(nt) par palier.

5. Procédé de séchage selon l'une des revendications 1 à 3, **caractérisé en ce que** le rapport des durées de rotation du tambour dans chaque sens de rotation et/ou la puissance de chauffage d'air de séchage et/ou la durée de la période de cadencement du moteur d'entraînement du tambour varie(nt) progressivement.

## Patentansprüche

1. Verfahren zum Trocknen einer Wäscheladung in einem Trockner oder einer Waschtrocknermaschine mit einer Rotationstrommel, wobei dieses Verfahren eine erste Phase (P1) der Erhöhung der Temperatur und der Stabilisierung bei einer gegebenen Temperatur aufweist, während der die Baugruppe mit den Strukturen der Maschine, der zu trocknenden Wäsche und der Trocknungsluft erwärmt wird, eine zweite Phase (P2) des Trocknungsvorgangs, in welcher die der Trocknungsluft zugeführte Wärme vorrangig dazu dient, das in der Wäsche enthaltene Wasser verdampfen zu lassen, und eine dritte Phase (P3) des Trocknungsendes für die Verdampfung des im "Zentrum" der Wäschefasem verbleibenden Wassers, wenn das am Rand dieser Fasern enthaltene Wasser verdampft wurde, wobei die Rotation der Trommel in eine Richtung einen Durchsatz der Trocknungsluft bewirkt, der größer ist als der Luftdurchsatz, der erreicht wird, wenn die Trommel in die entgegengesetzte Richtung dreht,
**dadurch gekennzeichnet, dass** zur Optimierung des Energieverbrauchs die Trommel in jeder der drei Trocknungsphasen abwechselnd in eine Rotationsrichtung, dann in die andere Richtung angetrieben wird, und dass in der dritten Phase (P3) der Durchsatz der Trocknungsluft sinkt, wobei diese Senkung dadurch erreicht wird, dass das Verhältnis der Rotationsdauern der Trommel in jede Rotationsrichtung geändert wird.

2. Verfahren zum Trocknen nach Anspruch 1, **dadurch gekennzeichnet, dass** die Heizleistung am Ende des Verfahrens sinkt.

3. Verfahren zum Trocknen nach Anspruch 1 oder 2, **dadurch gekennzeichnet, dass** die Dauer der Taktperiode des Antriebsmotors der Trommel, das heißt der Zeitraum zwischen zwei Rotationsanläufen der Trommel in eine gleiche Richtung, für die dritte Phase (P3) vermindert wird.

4. Verfahren zum Trocknen nach einem der Ansprüche 1 bis 3, **dadurch gekennzeichnet, dass** das Verhältnis der Rotationsdauem der Trommel in jede Rotationsrichtung und/oder die Leistung zur Erwärmung von Trocknungsluft und/oder die Dauer der Taktperiode des Antriebsmotors der Trommel stufenweise variiert (variieren).

5. Verfahren zum Trocknen nach einem der Ansprüche 1 bis 3, **dadurch gekennzeichnet, dass** das Verhältnis der Rotationsdauern der Trommel in jede Rotationsrichtung und/oder die Leistung zur Erwärmung von Trocknungsluft und/oder die Dauer der Taktperiode des Antriebsmotors der Trommel allmählich variiert (variieren).

## Claims

1. Method of drying a load of laundry in a tumble dryer or washer-dryer with a rotary drum, this method comprising a first phase (P1) of rise in temperature and stabilisation at a given temperature during which the whole including the machine structures, the laundry to be dried and the drying air are heated, a second phase (P2) of level drying stage during which the heat communicated to the drying air is used as a priority to vaporise the water contained in the laundry, and a third end of drying phase (P3) for vaporising the water remaining at the "core" of the fibres of the laundry when the water contained at the periphery of these fibres has been evaporated, the rotation of the drum in one direction causing a flow of drying air greater than the flow of air obtained when the drum rotates in the opposite direction,
**characterised in that**, in order to optimise the energy consumption, the drum is driven in alternation in one direction of rotation and then the other during each of the three drying phases, and **in that**, during the third phase (P3), the flow of drying air decreases, this decrease being obtained by modifying the ratio of the durations of rotation of the drum in each direction of rotation.

2. Drying method according to Claim 1, **characterised in that** the heating power decreases at the end of the method.

3. Drying method according to one of Claims 1 or 2, **characterised in that** the duration of the timing period of the motor driving the drum, that is to say the amount of time separating two starts of rotation of the drum in the same direction, is reduced for the third phase (P3).

4. Drying method according to one of Claims 1 to 3, **characterised in that** the ratio of the durations of rotation of the drum in each direction of rotation and/or the drying air heating power and/or the duration of the timing period of the motor driving the drum vary in stages.

5. Drying method according to one of Claims 1 to 3, **characterised in that** the ratio of the durations of rotation of the drum in each direction of rotation and/or the drying air heating power and/or the duration of the timing period of the motor driving the drum vary progressively.
